Europäisches Patentamt

European Patent Office

Office européen des brevets

(11) Numéro de publication : **0 331 567 B1**

# FASCICULE DE BREVET EUROPEEN

(45) Date de publication du fascicule du brevet :
**12.05.93 Bulletin 93/19**

(51) Int. Cl.⁵ : **H04B 7/195**

(21) Numéro de dépôt : **89400538.8**

(22) Date de dépôt : **27.02.89**

(54) **Système de communications avec des mobiles à l'aide de satellites.**

(30) Priorité : **02.03.88 FR 8802632**

(43) Date de publication de la demande :
**06.09.89 Bulletin 89/36**

(45) Mention de la délivrance du brevet :
**12.05.93 Bulletin 93/19**

(84) Etats contractants désignés :
**AT BE CH DE ES FR GB GR IT LI LU NL SE**

(56) Documents cités :
**EP-A- 0 059 454**
**EP-A- 0 213 355**
**PROCEEDINGS OF THE 7TH INTERNATIONAL**
**CONFERENCE ON DIGITAL SATELLITE**
**COMMUNICATIONS, Munich, 12-16 mai 1986,**
**pages 641-652, VDE-Verlag GmbH, Berlin DE;**
**P. DONDL: "Digital transmission in a quasi-**
**geostationary satellite system (LOOPUS)"**

(56) Documents cités :
**PROCEEDINGS OF THE IEEE, vol. 72, no. 11,**
**novembre 1984, pages 1627-1636, IEEE, New**
**York, US; K. BRAYER: "Packet switching for**
**mobile earth stations via low-orbit satellite**
**network"**

(73) Titulaire : **CENTRE NATIONAL D'ETUDES**
**SPATIALES**
**2 Place Maurice-Quentin**
**F-75039 Paris Cedex 01 (FR)**

(72) Inventeur : **Dulck, Jean-François**
**5 rue Garcia Lorca**
**F-31520 Ramonville St. Agne (FR)**
Inventeur : **Rouffet, Denis**
**16 rue Louis Pasteur**
**F-92100 Boulogne S/S (FR)**

(74) Mandataire : **Signore, Robert et al**
**c/o BREVATOME 25, rue de Ponthieu**
**F-75008 Paris (FR)**

## Description

La présente invention a pour objet un système de communications avec des mobiles relayés par satellites. Le demandeur désigne ce système par l'acronyme "SYCOMORES" abréviation de Système de Communications, avec des Mobiles Relayés par Satellites.

Par mobiles, on entend : les véhicules automobiles (voitures de tourisme, poids-lourds), les navires, les avions, les trains, et, par extension, tout utilisateur équipé de terminaux portables qui stationne temporairement.

Dans les premières années de l'ère spatiale sont apparus des satellites de communications ayant une période égale à 12 heures avec des orbites fortement elliptiques (périgée de l'ordre de 1 000 km et apogée de 39 000 km). Ces systèmes ont été développés principalement par l'union Soviétique, avec les satellites de type MOLNYA.

Cette technique présentait des inconvénients :
- freinage atmosphérique non négligeable du fait de la faiblesse de la hauteur du périgée,
- importance des effets perturbateurs du potentiel terrestre, inversement proportionnels à la valeur du demi-grand axe de l'orbite,
- double traversée des zones de Van Allen,
- nécessité d'utiliser au moins trois satellites pour une couverture 24h/24,
- forme lenticulaire allongée de la zone de couverture selon un axe Est-Ouest, mal adaptée à l'Europe occidentale,
- forte variation de la distance satellite-Terre entraînant un effet Doppler élevé et un effet de "zoom" provoquant des problèmes de couverture radioélectrique et de contrôle d'attitude.

L'avènement des satellites géostationnaires a permis de résoudre certaines de ces difficultés. De tels satellites, avec leur orbite circulaire équatoriale et leur période de 24 heures semblent immobilisés au-dessus de la terre. Ils peuvent donc constituer des relais privilégiés pour des réseaux de télécommunications.

Cependant, cette solution présente encore des inconvénients. En effet, l'angle d'élévation d'un satellite géostationnaire, vu d'un mobile au sol, varie avec la latitude du mobile, ce qui implique un pointage des antennes vers le satellite. Le tableau suivant donne quelques valeurs de l'élévation en fonction de la latitude d'un lieu, pour quelques villes de l'hémisphère nord situées dans une zone allant du Magrheb aux pays scandinaves.

|  | LATITUDE | ELEVATION MAX. |
|---|---|---|
| KIRUNA | 68° | 16°2 |
| STOCKHOLM | 59°3 | 23° |
| COPENHAGUE | 55°5 | 26°5 |
| AMSTERDAM | 52°3 | 30° |
| PARIS | 49°1 | 33°8 |
| TURIN | 45°2 | 38°5 |
| MADRID | 40°6 | 44°6 |
| ALGER | 36°6 | 47°3 |

Si cette élévation varie notablement, elle est en outre relativement faible pour les latitudes élevées, ce qui n'est pas sans poser des problèmes de transmission. Ainsi, pour un angle d'élévation de 38°, par exemple, un obstacle de 8 mètres de hauteur situé à 10 mètres d'un mobile empêchera la communication. Or, de tels obstacles sont courants dans les villes et les banlieues.

Par ailleurs, l'azimut de la direction mobile-satellite change continuellement par rapport au mobile, lorsque celui-ci change sa direction de déplacement. Il est donc nécessaire de prévoir des moyens de pointage permanent de l'antenne du mobile vers le satellite. Enfin, en ce qui concerne les moyens de ré-émission embarqués à bord du satellite, leur puissance devant être proportionnelle à 1/sin E (où E est l'élévation), elle varie avec la latitude de la zone de travail, ou tout au moins elle est fixée à une valeur élevée dictée par l'élévation

EP 0 331 567 B1

la plus faible.

Pour éviter ces inconvénients, on a proposé des constellations de satellites ayant des orbites coordonnées telles qu'une couverture permanente soit assurée au sol. Par exemple, dans le système GPS/NAVSTAR, on prévoit 21 satellites ayant des orbites circulaires de période 12 heures, quatre tels satellites étant toujours en vue directe d'un point de la terre. La demande de brevet européen EP 0 213 355 décrit une constellation de ce genre, mais avec seulement quatre satellites à orbites elliptiques ; ces satellites ont même période et ont des traces au sol différentes. Deux satellites ont leur périgée dans l'hémisphère Nord et les deux autres le leur dans l'hémisphère Sud. Dès lors, tout point du globe peut "voir" l'un de ces satellites à tout moment.

Un tel système présente néanmoins encore des inconvénients, en ce sens que l'élévation du satellite vu du mobile varie considérablement d'une région du globe à l'autre.

D'autres constellations sont décrites dans l'article de J.E. DRAIM intitulé "Three -and four- satellite continuous - coverage constellations" publié dans la revue "Journal of Guidance, Control and Dynamics", vol.8, n°6, November; December 1985, pages 725-730.

Bien qu'intéressantes à certains égards, aucune de ces constellations ne permet de résoudre tous les problèmes propres aux communications avec des mobiles. Ces problèmes sont essentiellement de trois ordres :
- tout d'abord, il est hautement souhaitable de s'affranchir de la nécessité d'avoir à orienter l'antenne du véhicule vers le satellite ;
- ensuite, il est préférable de pouvoir utiliser des antennes à fort gain (par exemple supérieure à 10 dB) afin d'accroître la capacité de transmission ;
- enfin, le système doit être bien protégé des perturbations de l'environnement.

La présente invention a justement pour objet un système qui remédie aux inconvénients de l'art antérieur et qui répond à toutes ces exigences.

A cette fin, l'invention prévoit un système qui comprend :
- au moins une station centrale disposée au sol en un lieu proche du centre d'une zone de couverture ayant une forme géographique sensiblement triangulaire, cette station étant reliée à un réseau de communications et possédant une antenne orientable au voisinage de la verticale,
- au moins deux satellites géosynchrones ayant des orbites elliptiques de caractéristiques identiques ayant même trace au sol mais présentant des longitudes de noeud ascendant décalées de $2\pi/n$ si n est le nombre de satellites, ces satellites possédant chacun des moyens d'émission-réception reliés à des antennes et des moyens pour pointer ces antennes vers la station centrale au sol pendant toute la durée où le satellite défile au-dessus de la zone de couverture au sol,
- des mobiles équipés d'une antenne à fort gain pointée verticalement.

Par rapport aux constellations à orbites elliptiques de 12 heures (type MOLNYA), la présente invention apporte de nombreux avantages :
- absence de freinage atmosphérique,
- pas de traversée des zones de Van Allen,
- réduction des perturbations du potentiel terrestre,
- deux satellites (et non trois) suffisent pour une couverture de 24 heures (même si trois satellites permettent d'obtenir une certaine redondance),
- adaptation de la forme de la zone de couverture (triangle sphérique) à l'Europe,
- absence d'éclipses aux latitudes Nord ou Sud supérieures à 35°,
- faible variation de la distance satellite-Terre entraînant un effet Doppler réduit et une configuration du satellite très proche de celle d'un satellite géostationnaire.

Le système de l'invention peut fonctionner avec deux satellites seulement dont les longitudes de noeuds ascendants sont décalées de 180°. C'est la constellation à nombre minimum de satellites pour un service 24 heures sur 24. Mais une constellation à trois satellites, dont les longitudes des noeuds ascendants sont décalées de 120° l'une par rapport à l'autre, autorise un service 24 heures sur 24, même en cas de panne de l'un quelconque des trois satellites de la constellation. C'est ainsi qu'on peut assurer la pérennité du service pour une durée de vie donnée du système.

De toute façon, les caractéristiques de l'invention apparaîtront mieux à la lumière de la description qui suit. Cette description porte sur des exemples de réalisation donnés à titre explicatif et non limitatif et se réfère à des dessins annexés sur lesquels :
- la figure 1 illustre de manière schématique le système de l'invention,
- la figure 2 montre la couverture géographique obtenue et la trace au sol des satellites,
- la figure 3 montre, de manière plus précise, l'altitude des satellites,
- la figure 4 illustre le fonctionnement d'une constellation à deux satellites,
- la figure 5 illustre le fonctionnement d'une constellation à trois satellites,
- la figure 6 montre un exemple de satellite pouvant être utilisé pour mettre en oeuvre l'invention,

3

- la figure 7 est un schéma de lancement et de mise à poste des satellites.

Dans la description qui va suivre, la zone couverte par le système sera supposée être située dans l'hémisphère Nord, entre environ 35° et 60° de latitude et entre environ -10° et +20° de longitude. Une telle zone couvre sensiblement l'Afrique du Nord, l'Europe occidentale, et le sud de la péninsule scandinave. Il va de soi que l'invention n'est pas limitée à une telle zone mais qu'elle peut s'adapter aisément à toute zone du globe, située dans l'un quelconque des deux hémisphères.

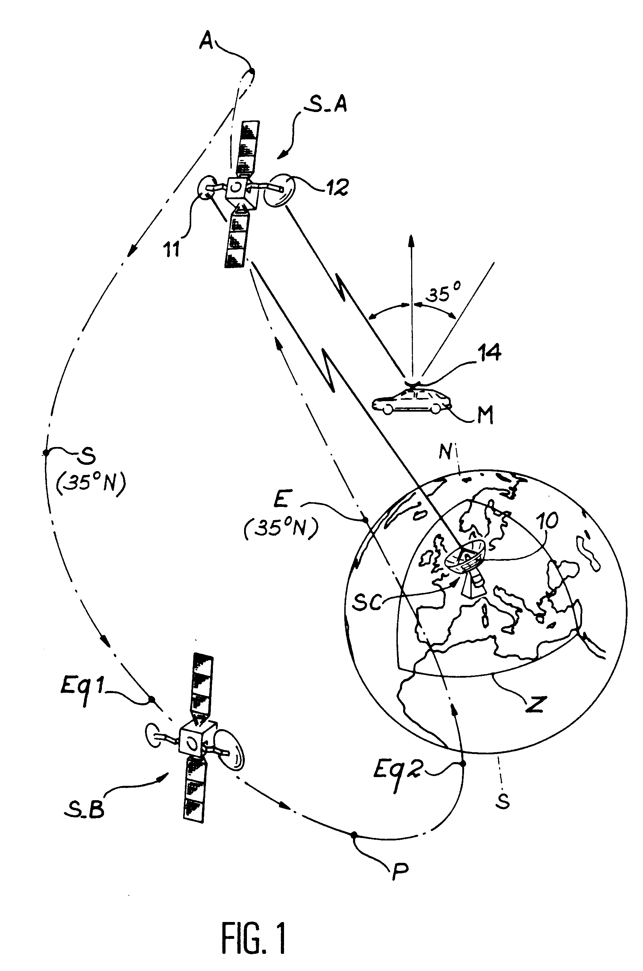

Sur la figure 1, on voit une zone de couverture Z, en forme de triangle sphérique, une station centrale SC disposée au sol, en un lieu proche du centre de la zone, et deux satellites géosynchrones S-A et S-B ayant des orbites elliptiques de paramètres identiques. A titre explicatif, ces paramètres peuvent être les suivants :

- apogée A situé à environ 50 543,4 km,
- périgée P située à environ 21 028,6 km,
- demi-grand axe de 42 164 km,
- inclinaison de 63°4,
- argument du périgée 270,
- excentricité de l'orbite 0,35.

Sur l'orbite de la figure 1 sont marqués les points Eq1 et Eq2 situés dans le plan de l'équateur ainsi que les points E et S situés à 35° de latitude et qui correspondent respectivement à l'entrée dans et à la sortie de la zone de fonctionnement des satellites.

Chaque satellite comprend une ou des antennes 11 et 12 ; chaque antenne est pointée vers la station centrale SC pendant toute la durée où le satellite défile au-dessus de la zone de couverture.

La station centrale peut comprendre une station de connexion et une station de contrôle.

Est également représenté, sur la figure 1, un mobile M (qui, cela va sans dire, est situé dans la zone Z mais qui est représenté au-dessus de celle-ci pour plus de clarté).

Chaque mobile est équipé d'une antenne 14 dont l'axe pointe en permanence vers le zénith (elle n'est donc pas orientable). Comme on le comprend mieux par la suite, l'angle maximum entre cet axe vertical et la ligne mobile-satellite est au maximum de 35°.

Pour décrire le fonctionnement de ce système on peut distinguer trois phases :
- première phase :
  au-delà de 35° de latitude nord, le ré-émetteur du satellite est en service ; les communications avec les mobiles sont relayées par le satellite, via la station de connexion au sol ; pour un satellite donné, cette phase dure 12 heures ;
- deuxième phase :
  entre 35° et l'équateur on peut distinguer une partie ascendante (du Sud vers le Nord) et une partie descendante (du Nord vers le Sud) ; durant la première, la station de contrôle vérifie l'état du satellite et commande sa mise en fonctionnement juste avant la latitude 35° ; durant la seconde, la station de contrôle commande la mise hors service des émetteurs embarqués et vérifie l'état du satellite avant qu'il ne devienne hors visibilité pour la station ; cette seconde phase dure 6 heures ;
- troisième phase :
  le satellite est sous le plan de l'équateur ; il est livré à lui-même, à moins naturellement qu'une station de contrôle annexe soit installée quelque part dans l'hémisphère sud ; cette dernière phase dure 6 heures.

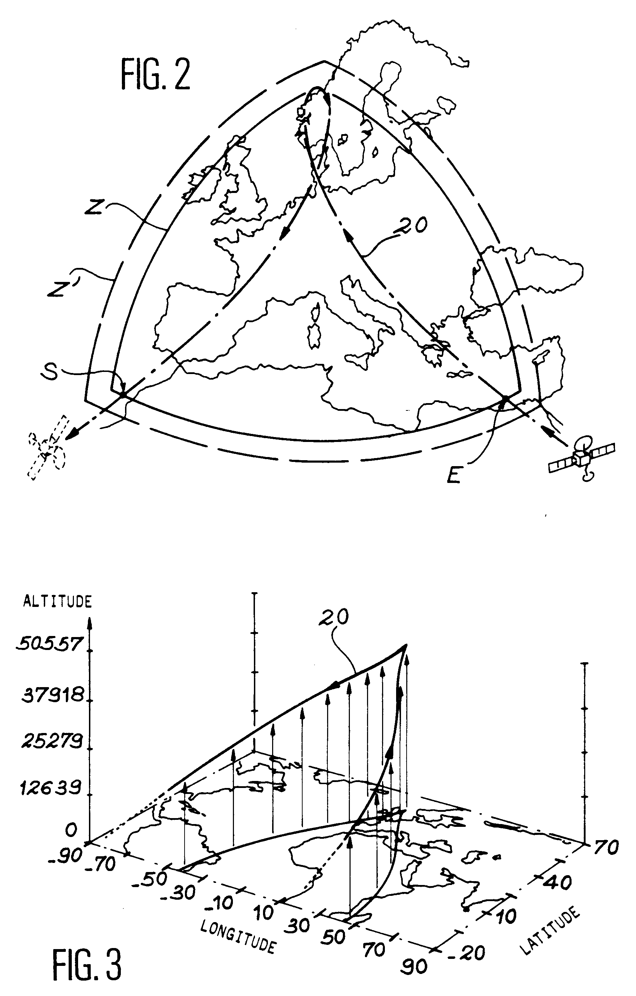

La figure 2 montre la trace au sol des satellites. Il faut souligner que cette trace est la même pour les deux (ou trois) satellites. Cette trace, référencée 20, pénètre dans la zone Z au point E, présente une boucle vers 60° de latitude nord et sort de la zone au point S. Les points E et S sont à une latitude d'environ 35°.

A l'intérieur de la zone géographique triangulaire Z, quel que soit le lieu où se trouve un mobile, on voit depuis ce lieu au moins un satellite pendant douze heures consécutives. Par ailleurs, dans la zone Z, l'élévation du satellite vu d'un mobile est toujours comprise entre 55° et 90°. Le satellite est donc toujours vu à l'intérieur d'un cône d'axe vertical dont le demi-angle d'ouverture est inférieur à 35°.

Sur la figure 2, on voit également une zone Z' légèrement plus étendue que la zone Z. Dans cette zone, l'angle de visibilité du satellite serait compris entre 50 et 90°.

La figure 3 montre l'altitude du satellite par rapport au sol. Sur les deux axes du plan horizontal sont portées la longitude et la latitude et sur l'axe vertical l'altitude. Seule la partie située au-dessus de 35° de latitude Nord est utilisée.

Ce diagramme permet d'apprécier la faible variation d'altitude des satellites, avec les avantages qui en découlent et qui ont été soulignés plus haut (situation quasi-géostationnaire).

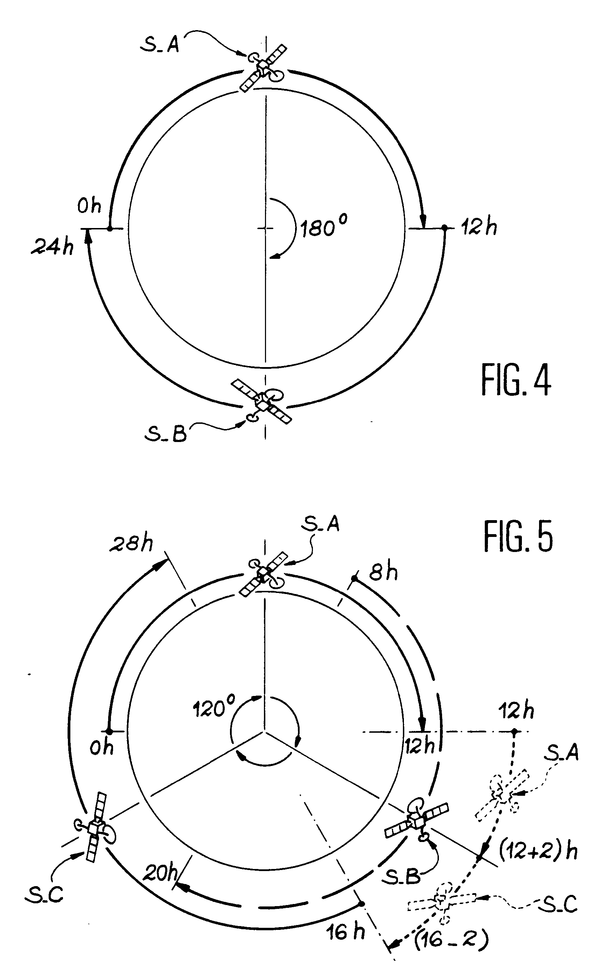

Les figures 4 et 5 permettent d'illustrer l'exploitation du système dans deux types de constellation (à deux ou à trois satellites).

Sur la figure 4, tout d'abord, la constellation ne comprend que deux satellites S-A et S-B. Ces satellites présentent des longitudes de noeud ascendant décalées de 180°. De l'heure zéro considérée comme origine et marquée Oh, correspondant à l'entrée du satellite S-A au-dessus de la zone de couverture, à 12 h, correspondant à la sortie de cette zone, tout point de la zone est en visibilité du satellite S-A ; les communications sont alors relayées par S-A.

De 12h à 24h, c'est le satellite S-B qui est en visibilité directe et les communications sont relayées par S-B.

Dans cette configuration, le balayage en latitude de l'antenne orientable solidaire du satellite est de ±15° et le balayage en longitude de ±2°.

Sur la figure 5, la constellation est supposée être à trois satellites S-A, S-B et S-C. Ces satellites ont des longitudes de noeud ascendant décalées de 120°.

En fonctionnement normal, il existe une certaine redondance dans le choix du satellite relais. De 0h à 12h, le relais peut être le satellite S-A ; de 8h à 20h c'est le satellite S-B qui peut servir de relais et de 16h à 24h c'est le satellite S-C.

Dans cette configuration nominale, le balayage des antennes en latitude est encore de ±15° et le balayage en longitude de ±2°.

Si l'un des trois satellites vient à tomber en panne, on peut encore obtenir un service 24 heures/24, en modifiant légèrement le balayage en latitude, qui soit passer à ±25° et le balayage en longitude, qui doit passer à ±3°5. Par exemple, en cas de défaillance du satellite S-B, on travaillera avec le satellite S-A de 0h à 12h en mode normal puis de 12h à 12+2=14h en mode dégradé (avec des longitude et latitude plus élevées) puis de 16-2=14h à 16h avec le satellite S-C en mode dégradé, et de 16 à 24h avec le satellite S-C en mode normal.

Ainsi, la durée de la période de fonctionnement dégradé n'excède-t-elle pas quatre heures sur 24.

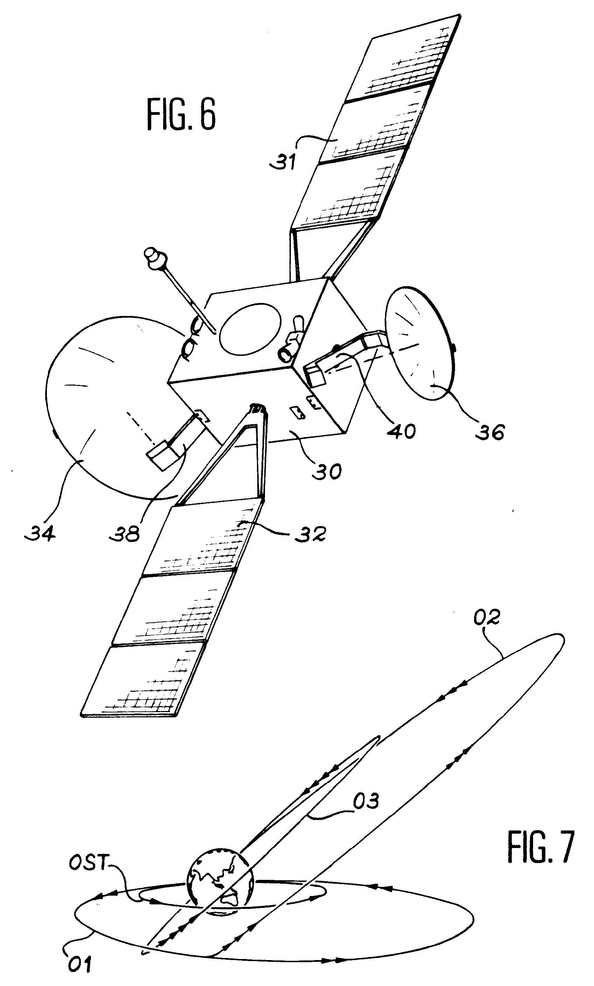

On a représenté sur la figure 6 un des types de satellites pouvant être utilisé pour la mise en oeuvre du système de l'invention. Il s'agit d'un satellite du type EUROSTAR de la Société MATRA. Ce satellite est stabilisé trois-axes et est équipé d'une roue cinétique maintenant un axe dans l'orientation Nord-Sud. La recherche et le maintien de cette orientation s'effectuent par des senseurs stellaires.

Tel que représenté, le satellite comprend un corps 30, sur lequel sont fixés deux panneaux solaires 31 et 32 et des antennes, notamment deux antennes paraboliques 34 et 36. Par transfert de moment cinétique entre la roue cinétique et le corps du satellite on peut obtenir un balayage en longitude de quelques degrés de la direction de pointage des antennes.

Le balayage en latitude est obtenu grâce à un degré de liberté offert au support d'antenne (par exemple grâce à un bras orientable, respectivement 38-40). On peut ainsi obtenir le balayage requis de l'ordre de ± 15°. La conjugaison de ces deux balayages permet aux antennes d'être constamment pointées sur la station de contrôle disposée au centre de la zone de couverture.

D'autres satellites peuvent être utilisés, par exemple le satellite du type SPACEBUS 100 B de l'AEROSPATIALE avec un mécanisme d'orientation des antennes du type "M.P.A. AEROSPATIALE".

En ce qui concerne la mise à poste des satellites, bien des stratégies sont possibles. On n'en décrira qu'une à titre explicatif, en liaison avec la figure 7.

Cette mise à poste utilise la fusée ARIANE IV et nécessite trois impulsions. Lors du lancement, le satellite est accompagné d'un satellite géostationnaire ordinaire. L'ensemble des deux satellites est placé sur l'orbite de transfert standard de la fusée ARIANE IV, à savoir une orbite située dans un plan quasiéquatorial (inclinaison de 7°), avec un périgée de 200 km, un apogée de 35 975 km et un argument du périgée de 178° (orbite marquée OST sur la figure 7).

A proximité du périgée de cette orbite standard de transfert, une fusée du satellite est allumée pour une première impulsion apte à porter l'apogée à 98 800 km, l'orbite restant dans le même plan (orbite 01). Cette impulsion peut être décomposée en deux ou trois impulsions.

A proximité de l'apogée de l'orbite 01, une nouvelle impulsion est communiquée pour charger le plan de l'orbite. L'inclinaison de celui-ci est proche de celle de l'orbite définitive (à savoir 63°4). Cette poussée est la plus importante et peut être décomposée en deux ou trois poussées. L'orbite devient 02.

Enfin, en un point approprié de cette orbite, une troisième poussée est communiquée au satellite pour lui donner l'orbite définitive.

En ce qui concerne les moyens de communications entre la station au sol, les satellites et les mobiles, on peut utiliser tout moyen connu dans le domaine des télécommunications spatiales. On peut cependant indiquer, à titre explicatif, que :

- la liaison entre la station de connexion et le satellite peut s'effectuer dans la bande C, entre 6 425 et 6 525 MHz dans le sens sol-satellite et entre 3 600 et 3 700 MHz dans le sens satellite-sol,
- la liaison entre la station de contrôle et le satellite peut s'effectuer dans la bande S, entre 2 029 et 2 033,6 MHz dans le sens sol-satellite et entre 2 203,5 et 2 208 MHz dans le sens satellite-sol ;
- la liaison entre le satellite et les divers mobiles (ou éventuellement des postes fixes) peut s'effectuer dans la bande L, entre 1 646,5 et 1 660,5 MHz dans le sens sol-satellite et entre 1 545 et 1 559 MHz dans le sens satellite-sol.

La station de contrôle au sol peut travailler avec un émetteur de 1 000 W en bande S, avec une antenne de gain 41 dB et de diamètre 6 m.

La station de connexion peut travailler avec un émetteur de 10 W en bande C avec une antenne de gain 42 dB et de diamètre 2,5 m.

A bord de chaque satellite, on trouvera trois réémetteurs, respectivement de 5 W en bande S, 400 W en bande L et 10 W en bande C. L'antenne en bande C aura un gain de 30 dB et un diamètre de 2,5 m et l'antenne en bande C un gain de 32 dB avec un diamètre de 0,75 m.

Naturellement, ces valeurs ne sont données qu'à titre d'exemples et ne limitent en rien la portée de l'invention.

## Revendications

1. Système de communications avec des mobiles à l'aide de satellites, caractérisé par le fait qu'il comprend :
   - au moins une station centrale (SC) disposée au sol en un lieu proche du centre d'une zone ce couverture (Z) ayant une forme géographique sensiblement triangulaire, cette station étant reliée à un réseau de communications et possédant une antenne (10) orientable au voisinage de la verticale,
   - au moins deux satellites géosynchrones (S-A, S-B) ayant des orbites elliptiques de caractéristiques identiques ayant même trace au sol mais présentant des longitudes de noeud ascendant décalées de $2\pi/n$ si n est le nombre de satellites, ces satellites possédant chacun des moyens d'émission-réception reliés à des antennes (11, 12) et des moyens pour pointer ces antennes vers la station centrale (SC) au sol pendant toute la durée où le satellite défile au-dessus de la zone de couverture au sol,
   - des mobiles (M) équipés d'une antenne (14) à fort gain pointée verticalement.

2. Système selon la revendication 1, caractérisé par le fait qu'il comprend deux satellites dont les orbites présentent des longitudes de noeud ascendant décalées de 180°.

3. Système selon la revendication 1, caractérisé par le fait que chaque satellite est du type stabilisé trois axes, avec un axe orienté Nord-Sud et comprenant une roue cinétique et par le fait que les moyens pour pointer les antennes travaillent par transfert de moment cinétique, pour imprimer aux antennes un balayage en longitude et comprennent une articulation pour imprimer aux antennes un balayage en latitude.

4. Système selon la revendication 1, caractérisé par le fait que la zone centrale au sol comprend des moyens pour télécommander la mise en marche des moyens d'émission-réception des satellites lorsque l'un d'entre eux pénètre dans la zone de couverture et pour mettre au repos ces moyens lorsque le satellite sort de la zone de couverture.

## Patentansprüche

1. Kommunikationssystem mit mobilen Benutzern mit Hilfe von Satelliten, gekennzeichnet durch die Tatsache, daß es umfaßt:
   - wenigstens eine zentrale Station (SC), die auf der Erde an einer Stelle nahe dem Zentrum einer Bedeckungszone (Z) mit einer im wesentlichen dreieckigen geographischen Form angeordnet ist, wobei diese Station mit einem Kommunikationsnetz verbunden ist und eine in der Nachbarschaft der vertikalen orientierbare Antenne (10) besitzt,
   - wenigstens zwei geosynchrone Satelliten (S-A, S-B) mit elliptischen Orbits mit identischen Charakteristiken, die dieselbe Spur auf der Erde besitzen aber Längen aufsteigender Knoten besitzen, die um $2\pi/n$ versetzt sind, wenn n die Zahl der Satelliten ist, wobei diese Satelliten jeweils mit Antennen (11, 12) verbundene Sende-Empfangsvorrichtungen und Vorrichtungen besitzen, um diese Antennen während der gesamten Dauer, während der der Satellit sich über der Bedeckungszone auf der Erde befindet, zur zentralen Station (SC) auf der Erde auszurichten,
      mobile Benutzer (M), die mit einer Antenne (14) mit hoher Verstärkung, die vertikal ausgerichtet ist, ausgerüstet sind.

**2.** System nach Anspruch 1, gekennzeichnet durch die Tatsache, daß es zwei Satelliten umfaßt, deren Orbits Längen mit aufsteigenden Knoten aufweisen, die um 180° versetzt sind.

**3.** System nach Anspruch 1, gekennzeichnet durch die Tatsache, daß jeder Satellit vom drei Achsen stabilisierten Typ ist, wobei eine Achse in Nord-Süd-Richtung orientiert ist und ein kinetisches Rad umfaßt, und durch die Tatsache, das die Vorrichtungen zum Ausrichten der Antennen durch Übertragung des kinetischen Moments arbeiten, um den Antennen eine Hin- und Herbewegung in der Länge aufzuprägen, und eine Gelenkverbindung aufweisen, um den Antennen eine Hin- und Herbewegung in der Breite aufzuprägen.

**4.** System nach Anspruch 1, gekennzeichnet durch die Tatsache, daß die zentrale Zone auf der Erde Vorrichtungen zur Fernsteuerung des Ingangsetzens der Sende-Empfangsvorrichtungen der Satelliten, wenn einer von ihnen in den Bedeckungsbereich eintritt, und zum Abschalten dieser Vorrichtungen, wenn der Satellit die Bedeckungszone verläßt, aufweisen.

## Claims

**1.** Communications system with moving bodies using satellites,
characterized in that it comprises:
at least one central station (SC) on the ground at a place close to the centre of a coverage area (Z) with a substantially triangular geographical shape, said station being connected to a communications network and having an antenna (10) orientable in the vicinity of the vertical,
at least two geosynchronous satellites (S-A, S-B) having elliptical orbits with identical characteristics and the same trace on the ground, but having longitudes of ascending node displaced by $2\pi/n$ if n is the number of satellites, each said satellites having transmission-reception means connected to antennas (11, 12) and means for pointing these antennas towards the central station (SC) on the ground for the complete time during which the satellite passes over the ground coverage area,
moving bodies (M) equipped with a vertically pointed high gain antenna (14).

**2.** System according to claim 1, characterized in that it comprises two satellites, whose orbits have longitudes of ascending node displaced by 180°.

**3.** System according to claim 1, characterized in that each satellite is of the triaxially stabilized type, with one axis oriented north-south and having a kinetic wheel and in the means for pointing the antennas operate by kinetic moment transfer, in order to give the antennas a longitude sweep and having an articulation in order to give the antennas a latitude sweep.

**4.** System according to claim 1, characterized in that the central area on the ground has means for remotely controlling the starting up of the transmission-reception means of the satellite when one of the latter enters the coverage area and to render said means inoperative when the satellite leaves the coverage area.

FIG. 1

FIG. 2

Z

Z'

S

20

E

FIG. 3

ALTITUDE

50557

37918

25279

12639

0

-90 -70 -50 -30 -10 10 30 50 70 90

LONGITUDE

20

70 40 10 -20

LATITUDE

FIG. 4

FIG. 5

FIG. 6

31

34    38    32

30    40    36

02

03

OST

FIG. 7

01